# FASCICULE DE BREVET EUROPEEN

(11) **EP 0 864 748 B1**
(45) Date de publication et mention de la délivrance du brevet: **25.05.2005**
(21) Numéro de dépôt: 98400560.3
(22) Date de dépôt: 10.03.1998
(51) Int. Cl.: F03D 9/00, F03D 7/04, F03D 9/02

(54) **Eolienne à attaque directe basse vitesse**
Langsamlaufende getriebelose Windturbine
Low speed gearless wind turbine

(30) Priorité: 10.03.1997 FR 9702808
(43) Date de publication de la demande: 16.09.1998
(73) Titulaire: JEUMONT INDUSTRIE, 92400 Courbevoie (FR)
(72) Inventeur: Brutsaert, Patrick, 59245 Recquignies (FR); Michaux, Raymond, 59740 Solre Le Chateau (FR); Canini, Jean Marc, 59149 Aibes (FR)
(74) Mandataire: Bentz, Jean-Paul

(56) Documents cités:
- EP-A- 0 017 724
- WO-A-91/05953
- WO-A-94/22204
- BE-A- 902 092
- DE-A- 2 623 233
- DE-A- 2 709 146
- DE-A- 4 402 184
- FR-A- 2 551 142
- FR-A- 2 742 939
- Z.CHEN ,E.SPOONER: "A variable speed,permanent magnet,wind turbine generator and its control" POWER ENGINEERING CONFERENCE 1995, vol. 2, 5 - 7 septembre 1995, LONDON,UK, pages 517-520, XP002048891
- C.M.JEFFERSON,N.LARSEN: "The applications of flywheels in short term energy storage" ALTERNATIVE ENERGY SYSTEMS,ELECTRICAL INTEGRATION AND UTILIZATION CONFERENCE, 10 - 12 septembre 1984, COVENTRY,UK, pages 97-104, XP002048892
- Grauers A.:'Design of direct driven permanent magnet generators for wind turbines', Ph.D. Thesis. Technical report 292, October 1996. Departement of electrice power engineering, School of electrical and computer engineering, Chalmers University of Technology.(page 1-55)
- Caricchi F. et al: 'Prototype of a wind turbine directly coupled axial-flux PM generator', 5th European Wind Energy Exhibition. 10-14 October 1994. Thessaloniki-Greece

## Description

La présente invention se situe dans le domaine de la production d'énergie éolienne.

Elle concerne un système de production d'énergie électrique actionné par la force du vent exercée sur les pales d'une éolienne.

On connaît différents types d'éoliennes, à mât sensiblement vertical et à axe sensiblement horizontal ou encore à axe sensiblement vertical.

Les besoins en énergie augmentent de façon constante, alors que les réserves de combustibles fossiles se réduisent.

C'est pourquoi, les compagnies d'électricité ont commencé à intégrer l'énergie éolienne parmi les autres sources d'énergie conventionnelles. De nombreuses centrales éoliennes ont ainsi été installées.

La plupart des éoliennes destinées à la production d'énergie comprennent une génératrice asynchrone rapide, accouplée à un multiplicateur, lui-même entraîné par le moyeu sur lequel les pales de l'éolienne sont fixées, une telle éolienne est divulguée dans le document FR-A-2551142. On peut notamment citer les éoliennes du constructeur Micon.

A titre d'exemple, à une génératrice asynchrone à 1 500 t/mn et un multiplicateur entraîné à une vitesse de 27 t/mn, correspond une puissance de 600 KW.

Tous ces éléments sont placés dans une nacelle, montée rotative à l'extrémité d'un mât. La hauteur du mât est généralement comprise entre 30 et 60 mètres.

Dans la nacelle, est également prévu un système de contrôle de l'orientation de la nacelle et éventuellement, un système de contrôle de l'incidence des pales. Ceci permet d'orienter les pales en fonction du vent. En particulier, si le vent devient trop important, on modifie la prise au vent pour des raisons d'exploitation et de sécurité.

Ces systèmes, comme le multiplicateur, nécessitent la présence d'au moins une centrale hydraulique dans la nacelle.

Un système de contrôle global de l'éolienne est généralement prévu. Il utilise un automate qui régule notamment un éventuel contrôle d'incidence des pales, le positionnement de la nacelle et/ou le couplage de la génératrice sur le réseau.

La génératrice étant du type asynchrone à une ou deux vitesse(s) fixe(s), le fonctionnement sur le réseau n'est pas optimal dans toute la plage de vitesse de vent.

Des éoliennes à attaque directe basse vitesse sont également installées. On peut notamment citer les éoliennes fabriquées par la société Enercon. Elles comprennent une machine synchrone à flux radial de grand diamètre. Le disque rotor de la machine est entraîné par un arbre, lui-même entraîné en rotation par les pales de l'éolienne.

La machine synchrone alimente le réseau à travers un convertisseur courant alternatif/courant continu/courant alternatif. Un tel convertisseur permet d'alimenter le réseau à une fréquence et une tension appropriées.

Dans de telles éoliennes, tous les systèmes de contrôle sont électriques, notamment ceux qui assurent le contrôle du pas des pales ou l'orientation de la nacelle, ainsi que le système de freinage.

Ces éoliennes permettent d'éviter la présence d'un multiplicateur et d'une centrale hydraulique. Elles peuvent par ailleurs délivrer de l'énergie, même lorsque la vitesse du vent est faible.

Cependant, elles comportent un système de refroidissement par air qui génère un niveau de bruit relativement important.

Par ailleurs, la présence de bobinages d'excitation rotor implique des pertes d'excitation qui deviennent importantes aux faibles vitesses de vent, diminuant notablement le rendement de l'ensemble.

Enfin, la puissance de la machine synchrone est nécessairement limitée par le diamètre du rotor.

L'excitation d'une telle machine à rotor bobiné implique, soit l'utilisation d'un jeu de bagues et de balais, générateur de contraintes de maintenance, soit la mise en place d'une machine auxiliaire d'excitation et d'un jeu de redresseurs tournants, qui augmentent encore la masse de l'ensemble.

On peut également noter que, de façon générale, le montage des éoliennes est relativement difficile. Il nécessite des grues de grande hauteur, pouvant soulever des éléments de poids et d'encombrement importants. Ainsi, le montage nécessite la mise en oeuvre d'un génie civil important. Le montage de telles éoliennes n'est donc pas possible dans les pays ne disposant pas d'équipements appropriés.

La publication de F. Caricchi et al. "Prototype of a Wind Turbine Directly - Coupled Axial - Flux PM Generator", 5^{th} European Wind Energy Association Conference and Exhibition, 10-14 October 1994, Thessaloniki (Greece) décrit un système de production d'énergie électrique associé à une éolienne et comprenant les caractéristiques faisant l'objet du préambule de la revendication 1.

Plus précisément, selon ce système connu, les disques rotor de l'alternateur sont reliés rigidement à l'arbre de la machine.

L'invention a pour objet un système de production d'énergie associé à une éolienne ne nécessitant pas de multiplicateur, ni d'arbre intermédiaire rotatif de support des disques rotor présent dans le système de la publication susmentionnée, tout en facilitant la construction de l'éolienne et en diminuant le bruit généré par l'éolienne en fonctionnement.

Ce système de production d'énergie électrique est associé à une éolienne qui comprend des pales fixées sur un support et entraînant en rotation le rotor d'un alternateur.

Cet alternateur est de type discoïde et constitué d'au moins un module comprenant au moins un disque rotor et un disque stator centrés sur l'axe du support des pales, les modules étant assemblés pour que tous les disques rotor et stator soient disposés coaxialement.

L'entraînement direct du ou des disque(s) rotor par les pales de l'éolienne rend inutile la présence d'un multiplicateur et permet éventuellement de supprimer complètement la centrale hydraulique.

Par ailleurs, la conception modulaire de l'alternateur permet d'adapter facilement la puissance du système.

Les caractéristiques suivantes peuvent également être prises en compte, isolément ou selon toutes leurs combinaisons techniquement possibles :
- le support des pales est constitué par la carcasse de l'alternateur, laquelle comprend le ou les disque(s) rotor de l'alternateur,
- un module comprend un disque rotor placé entre deux disques stator ou un disque stator entre deux disques rotor,
- le(s) disque(s) rotor(s) est (sont) à aimants permanents,
- les disques stator sont fixés à la nacelle de l'éolienne,
- un convertisseur courant alternatif(-courant continu) -courant alternatif est prévu entre l'alternateur et le réseau,
- le convertisseur courant alternatif (-courant continu)-courant alternatif est composé d'un redresseur et d'un onduleur, tous deux pilotés suivant le principe de la modulation de largeur d'impulsions,
- l'éolienne comporte un système de contrôle global des paramètres de fonctionnement.

L'invention concerne également une éolienne équipée d'un système de production d'énergie selon l'invention et dont certains composants, notamment les pales, leur support, l'alternateur discoîde et/ou la nacelle, sont réalisés séparément et assemblés définitivement au sommet du mât de l'éolienne.

L'invention concerne également un parc d'éoliennes équipées chacune d'un système de production d'énergie électrique selon l'invention et d'un convertisseur courant alternatif - courant continu.

La sortie de chacun ces convertisseurs est reliée au moins à un convertisseur courant continu - courant alternatif, la sortie commune des convertisseurs courant continu-courant alternatif étant reliée au réseau.

Les caractéristiques suivantes peuvent également être prises en compte, isolément ou selon toutes leurs combinaisons techniquement possibles :
- le parc d'éoliennes comprend un système de stockage d'énergie, entre les convertisseurs courant continu-courant alternatif et le réseau,
- le parc d'éoliennes comprend au moins un système de stockage d'énergie cinétique, alimenté par la tension continue prélevée en sortie du (ou des) convertisseur(s) courant alternatif - courant continu,
- le (ou les) système(s) de stockage d'énergie cinétique comprend(nent) au moins un moteur à courant alternatif entraînant au moins une inertie et alimenté par au moins un convertisseur courant continu - courant alternatif réversible, lui-même connecté en sortie du (ou des) convertisseurs courant alternatif - courant continu,
- lesdits convertisseurs courant alternatif-courant continu sont constitués d'un redresseur piloté selon le principe de la modulation de largeur d'impulsions,
- lesdits convertisseurs courant continu-courant alternatif sont constitués d'un onduleur piloté selon le principe de la modulation de largeur d'impulsions.

L'invention sera mieux comprise et d'autres buts, avantages et caractéristiques de celle-ci apparaîtront plus clairement à la lecture de la description suivante de modes non limitatifs de réalisation et sur lesquels :
La figure 1 représente une éolienne vue de face.
La figure 2 représente la même éolienne vue de côté.
La figure 3 est une vue schématique en coupe d'un premier exemple de système de production d'énergie selon l'invention.
La figure 4 est une vue schématique en coupe d'un deuxième exemple de système de production d'énergie selon l'invention.
Les figures 5 et 6 illustrent deux exemples de raccordement au réseau électrique d'un parc d'éoliennes.
Les figures 7 et 8 illustrent deux autres exemples de raccordement au réseau électrique d'un parc d'éoliennes comprenant un système de stockage d'énergie cinétique.

Les éléments communs aux différentes figures seront désignés par les mêmes références.

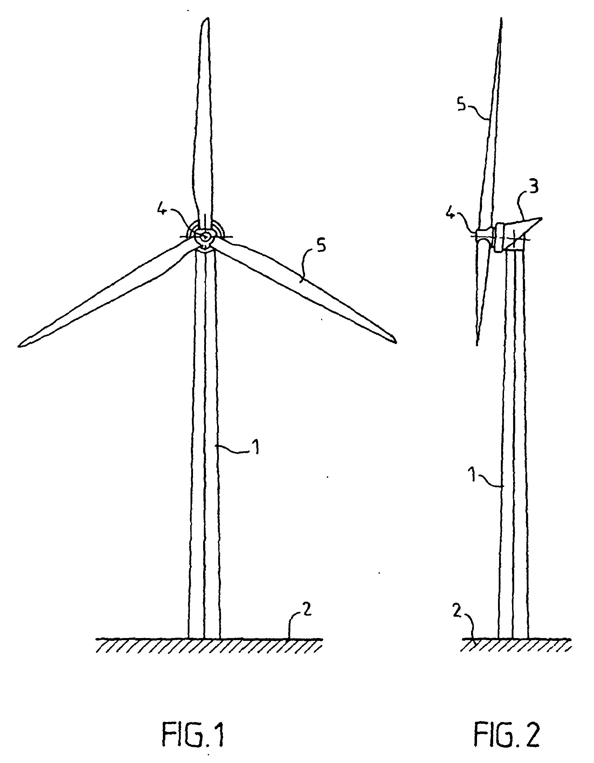

En référence aux figures 1 et 2, l'éolienne généralement comporte un mât 1 fixé dans le sol 2.

A l'extrémité du mât, est montée une nacelle 3 qui peut tourner autour du mât.

La nacelle supporte un moyeu 4 qui lui-même, porte les pales 5. Elles sont entraînées en rotation par le vent.

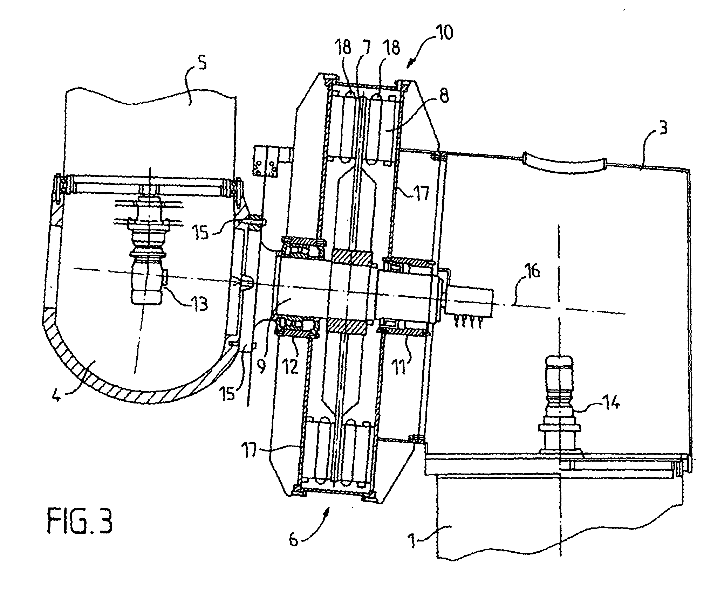

En référence à la figure 3, le système de production d'énergie selon l'invention comporte un alternateur 6 du type discoide, constitué d'un ou plusieurs modules.

Dans l'exemple illustré à la figure 3, l'alternateur est constitué d'un module 10 qui comprend un rotor 7 central et deux stators 8 encadrant le rotor.

Le rotor 7, équipé d'aimants permanents, est fixé sur un arbre 9 et centré sur l'axe 16 de l'arbre 9. L'arbre 9 est lui-même relié au moyeu 4 par des moyens 15 appropriés.

L'utilisation d'un rotor à aimants permanents présente l'avantage de réduire encore l'encombrement de l'alternateur discoïde 6, qui est déjà inférieur à celui d'un générateur classique. Comme on le verra ultérieurement, ceci facilite le transport du générateur et sa mise en place sur l'éolienne.

Dans cet exemple de réalisation, le support des pales est constitué par le moyeu 4. L'axe du moyeu coincide avec l'axe 16 de l'arbre 9 et du rotor central 7.

L'arbre 9 est supporté et guidé par les paliers 11 et 12 qui sont fixés dans la nacelle 3.

Les stators 8 sont également montés de façon fixe dans la nacelle, au moyen d'éléments de carcasse 17 solidaires des paliers 11 et 12.

Les stators 8 sont équipés de bobinages 18.

La rotation des pales 5 entraîne le moyeu 4, l'arbre 9 et donc le rotor 7 de l'alternateur discoide. Celui-ci est donc directement accouplé au moyeu 4 de l'éolienne et peut fonctionner à vitesse variable.

La référence 13 désigne un système de réglage du pas des pales 5 et la référence 14, le système d'orientation de la nacelle 3.

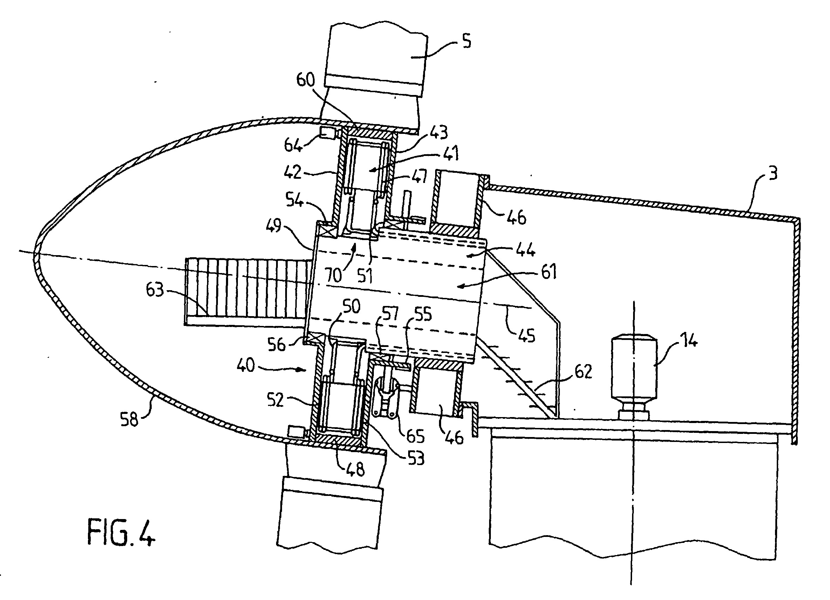

La figure 4 décrit un autre exemple de réalisation du système de production d'énergie selon l'invention, dans lequel les pales 5 de l'éolienne sont directement montées sur l'alternateur du système.

Cet alternateur 40 est également du type discoide et peut comprendre un module, comme illustré à la figure 4, ou plusieurs modules.

L'alternateur 40 comprend ici un module 70 composé d'un stator central 41 et deux rotors 42, 43 encadrant le stator 41.

Le disque stator 41 est solidaire d'un arbre fixe 44 et centré sur l'axe 45 de l'arbre 44. Ce dernier est, par ailleurs, rendu solidaire de la nacelle 3, par l'intermédiaire de moyens appropriés 46.

Sur chacune de ses faces, le disque stator 41 comporte des bobinages 47.

Les deux disques rotor 42 et 43 sont solidaires de la carcasse 60 de l'alternateur. Ils sont équipés d'aimants permanents 52 et 53.

Chaque disque rotor 42, 43 comporte également un flasque 54, 55 permettant de le centrer sur l'axe 45 de l'arbre 44, par l'intermédiaire d'un roulement à billes 56, 57.

A l'extrémité de l'arbre 44, est prévu un cache 49 qui permet d'éviter l'introduction de corps étrangers dans le roulement 56.

La carcasse 60 de l'alternateur 40 est constituée par les disques rotor 42, 43 et une partie cylindrique 48 entre les deux disques.

Ainsi, les pales 5 de l'éolienne sont fixées sur la carcasse 60 de l'alternateur. Sur l'exemple illustré à la figure 4, cette fixation est réalisée par l'intermédiaire d'une structure 58 supportant les pales 5.

Dans cet exemple de réalisation, le support des pales est constitué par la carcasse de l'alternateur et l'axe du support coincide avec l'axe 45 des disques rotor et de l'arbre 44.

Les pales de l'éolienne entraînent donc directement en rotation les disques rotor 42 et 43 de l'alternateur 40, sans qu'un arbre intermédiaire ne soit nécessaire, comme dans l'exemple de réalisation représenté à la figure 3.

Toujours en référence à la figure 4, la référence 61 désigne un évidement ménagé dans l'arbre 44. Cet évidement permet le passage d'une personne, qui peut y accéder grâce à un escalier 62 prévu dans la nacelle. L'évidement 61 débouche sur une passerelle 63.

Il permet d'assurer la maintenance des équipements situés à l'intérieur de la structure 58 et notamment, des moteurs 64 du système de réglage du pas des pales qui est éventuellement prévu.

Enfin, la référence 65 désigne un frein mécanique.

Dans tous les cas, le système de production d'énergie selon l'invention est conçu de telle sorte que l'alternateur fonctionne à la même vitesse de rotation que le support des pales de l'éolienne. Ceci permet la suppression de certains composants, comme le multiplicateur, qui est l'un des grands consommateurs d'une centrale hydraulique. On peut alors envisager de supprimer complètement la ou les centrale(s) hydraulique(s), qu'elle(s) soi(en)t prévue(s) à des fins de lubrification ou de commande. Tous les auxiliaires, comme le contrôle éventuel de l'incidence des pales ou le positionnement de la nacelle face au vent, sont alors conçus avec une motorisation électrique.

La puissance du système peut, par ailleurs, être augmentée sans remettre en cause la conception de l'éolienne, ce qui rend le système très flexible.

En effet, le nombre de modules rotor/stator 10, 70 de l'alternateur peut être choisi en fonction de la puissance désirée. Ces modules sont empilés les uns derrière les autres, ce qui limite l'encombrement. Le rotor de chaque module est centré et directement monté sur l'arbre 9 ou 44 et tous les modules sont assemblés mécaniquement pour que tous les disques rotor et stator soient disposés coaxialement.

A cet égard, on peut notamment se référer à la demande de brevet internationale PCT/FR 96/020 71 qui décrit une machine électrique discoîde réalisée à base de modules stator/rotor élémentaires et dont le contenu est inclus dans la présente demande à titre de référence.

Le diamètre de la nacelle peut être conservé.

Cependant, la multiplication des modules de l'alternateur est surtout justifiée pour des puissances supérieures à 1 000 KW.

Le tableau suivant est donné à titre d'exemple :

| NOMBRE de module (s) | Puissance |
|---|---|
| 1 | 750 KW |
| 2 | 1 250 KW |
| 3 | 1 630 KW |

D'autres modules peuvent être proposés pour des puissances supérieures à 2 MW.

Le système de production d'énergie selon l'invention se révèle également avantageux pour les éoliennes de Faible puissance, puisqu'il permet d'éviter dans ce cas aussi la présence d'un multiplicateur.

Le système de production d'énergie selon l'invention permet également de simplifier la fabrication de l'éolienne et d'en réduire les coûts.

Dans les éoliennes connues, les éléments constitutifs de l'éolienne forment un ensemble unitaire qu'il faut hisser en haut du mât.

Avec le système selon l'invention, l'éolienne peut être réalisée en plusieurs composants distincts : notamment le mât, les pales, la nacelle et le dispositif d'orientation, le générateur discoide, lui-même composé de modules distincts.

Les éléments peuvent être ainsi montés les uns après les autres de façon simple, car la masse et l'encombrement de chaque élément sont faibles. Le générateur discoïde est notamment plus compact que des générateurs classiques.

Pour un système de production d'énergie à forte puissance, les différents modules de l'alternateur discoide peuvent être montés successivement. Le montage peut donc être réalisé à l'aide d'une grue de faible capacité et de structure relativement légère, ne nécessitant pas un génie civil important.

Le montage de l'éolienne peut également être effectué avec une grue montée à la partie supérieure du mât. Elle permet de lever successivement les différents composants comme la nacelle ou l'alternateur. Cette grue est soit démontée et amenée au sol, soit intégrée à l'éolienne.

Ainsi, dans tous les cas, au moins certains composants de l'éolienne peuvent être réalisés et hissés séparément, l'assemblage définitif ayant lieu au sommet du mât de l'éolienne.

Par ailleurs, la forme compacte de l'alternateur discoide permet de simplifier la forme de la nacelle et donc sa fabrication. Elle peut présenter une forme sensiblement cylindrique.

Le système de production d'énergie selon l'invention permet enfin de réduire le niveau de bruit aérien de l'éolienne.

En effet, celle-ci est complètement fermée et peut également être munie de circuits de refroidissement. Il n'y a donc pas de propagation aérienne du bruit interne de l'éolienne dans l'environnement extérieur.

Par ailleurs, le système selon l'invention comprend un alternateur discoïde présentant une grande puissance massique et volumique.

Il permet, par rapport à d'autres types de génératrices et à volume, masse et puissance identiques, une augmentation du couple sur le ou les disque(s) rotor et donc, une diminution de la vitesse de rotation de la ligne d'arbre. Ceci conduit à une réduction du bruit généré par les pales de l'éolienne.

De plus, l'alternateur discoïde selon l'invention présente une section au vent inférieure à celle de l'alternateur à champ radial et à attaque directe, pour une puissance équivalente. Ceci est renforcé par la structure modulaire de l'alternateur. Par conséquent, il assurera de meilleures conditions aérodynamiques pour les pales de l'éolienne, la surface « utile » des pales étant plus importante.

Entre l'alternateur discoide et le réseau doit être prévu un convertisseur courant alternatif/courant alternatif ou courant alternatif/courant continu/courant alternatif.

On choisit, de préférence, un convertisseur à performances élevées permettant un couplage progressif de l'éolienne sur le réseau. Dans les éoliennes actuelles comportant une génératrice asynchrone, ce couplage est rapide et provoque des perturbations sur le réseau.

Par ailleurs, le réseau peut envoyer des signaux de télécommande. A titre d'exemple, on peut citer des signaux de 175 Hz pour commander des auxiliaires tels que des changements de tarif (nuit/jour) ou des effacements de jours de pointe. Certains types d'éoliennes nécessitent un filtre bouchon pour ne pas perturber les signaux de télécommande.

Le convertisseur présente l'avantage de ne pas perturber les éventuels signaux de télécommande du réseau, voire de les régénérer.

L'utilisation d'un convertisseur permet de contrôler le facteur de puissance et donc la puissance réactive absorbée ou fournie au réseau.

Par ailleurs, le contrôle fin du courant permet de réduire les harmoniques du courant fourni et donc de fournir une énergie de qualité au réseau.

De préférence, le convertisseur se compose de deux étages de puissance :
- un redresseur, dont la commande est de type « modulation de largeur d'impulsions » et qui transforme le courant alternatif fourni par l'alternateur à aimants en courant continu. La commande du pont redresseur permet de contrôler les formes d'onde du courant fourni par l'alternateur et le facteur de puissance. Ceci permet d'une part, de réduire les pulsations de couple et donc les contraintes mécaniques sur le rotor et d'autre part, de minimiser la masse d'aimant et donc le coût de l'alternateur,
- un onduleur dont la commande est également du type « modulation de largeur d'impulsions » et qui transforme le courant continu en courant alternatif dont la forme et la fréquence sont compatibles avec le réseau. Grâce à la stratégie de commande du pont onduleur, les niveaux harmoniques du courant sont minimisés, et le facteur de puissance est contrôlé.

L'utilisation d'un alternateur à aimants connectés à un convertisseur à IGBT présente l'avantage d'accroître la sécurité au court-circuit, notamment si le convertisseur est placé à proximité de l'alternateur dans la nacelle.

L'utilisation de convertisseurs est particulièrement intéressante sur des réseaux isolés où la qualité du courant fourni par l'éolienne est un critère important.

Le système de production d'énergie selon l'invention peut fonctionner à vitesse variable. Ceci permet d'optimiser le fonctionnement de l'éolienne, notamment aux vents faibles.

Les éoliennes peuvent être placées dans des environnements différents. Les paramètres optimaux de fonctionnement de l'éolienne dépendent non seulement du vent mais également de paramètres liés à l'environnement des éoliennes, comme la présence de bâtiments ou l'orientation du vent.

L'éolienne comporte, de préférence, un système de contrôle global. De façon avantageuse, ce système met en oeuvre des logiciels de type logique floue ou technique neuronale. Ils permettent d'optimiser le fonctionnement de l'éolienne par apprentissage et adaptation permanente des paramètres de fonctionnement, notamment aux vitesses basses.

Dans ce cas, le contrôle a un effet sur l'éventuel réglage du pas des pales et sur le choix de la vitesse optimale.

Lorsque plusieurs éoliennes sont implantées sur le même site, leurs systèmes de production d'énergie peuvent être interconnectés par un réseau continu de puissance.

Comme on l'a vu précédemment, pour chaque éolienne, est prévu un convertisseur courant alternatif-courant alternatif ou courant alternatif/courant continu/courant alternatif entre l'alternateur discoide et le réseau.

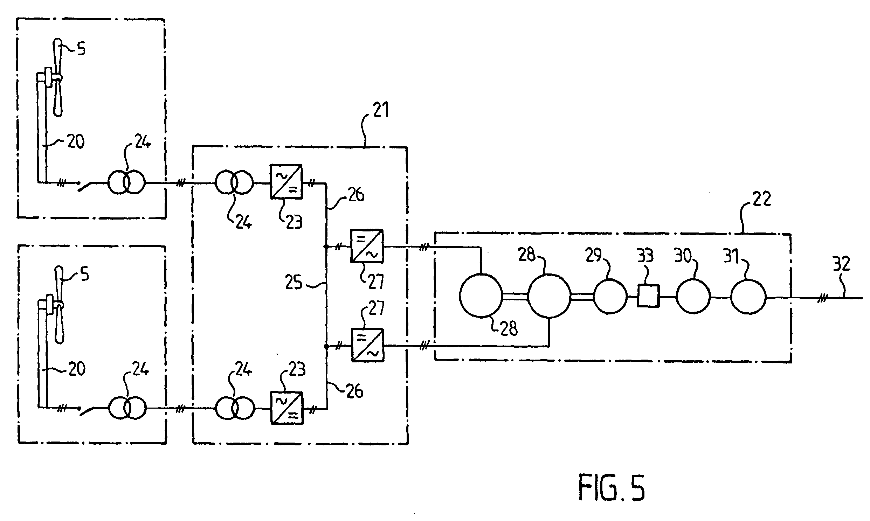

On se réfère ensuite aux figures 5 à 8 qui représentent différentes solutions de montage.

Le système illustré à la figure 5 comporte une centrale éolienne composée de deux éoliennes 20 équipées d'un système de production d'énergie selon l'invention, un ensemble de convertisseurs électroniques 21 et un système de stockage d'énergie 22. Ce dernier système est facultatif.

La figure 5 illustre deux éoliennes et deux convertisseurs mais ce montage peut être appliqué à un nombre quelconque d'éoliennes, associées chacune à un convertisseur.

Chaque éolienne 20 comprend un alternateur discoïde, notamment à aimants permanents, entraîné directement et à la même vitesse de rotation que les pales 5 de l'éolienne. La sortie de l'alternateur est triphasée, à fréquence et tension éventuellement variables suivant la vitesse du vent. Elle est connectée vers l'extérieur à travers un organe de protection et éventuellement un transformateur pour élever la tension.

L'ensemble 21 de convertisseurs électroniques comprend :
- deux convertisseurs 23 de type redresseur, chacun connecté à une éolienne à travers éventuellement un transformateur 24 pour réduire la tension alternative. Le redresseur convertit l'énergie alternative en énergie continue,
- un bus de puissance continu 25 relié à l'ensemble des sorties 26 des redresseurs 23 et qui permet de lisser l'énergie totale fournie par la centrale éolienne. La tension du bus continu est éventuellement variable,
- des convertisseurs électroniques 27 de type onduleur qui sont alimentés par le bus continu 25, et qui sont reliés au système de stockage d'énergie 22.

Celui-ci se compose principalement :
- en entrée, d'un auxiliaire 29 entraîné par au moins un moteur d'entraînement 28, alimenté à vitesse contrôlée et éventuellement variable par les convertisseurs 27,
- en sortie, d'un auxiliaire 30 entraînant un alternateur 31 alimentant le réseau électrique 32 à la tension et à la fréquence appropriée et,
- d'un dispositif 33 placé entre les deux auxiliaires 29 et 30 et permettant de stocker ou de déstocker de l'énergie pour permettre à l'alternateur de sortie 30 de fonctionner toujours dans les conditions requises par le réseau électrique 32. Le dispositif de stockage 33 peut être de tout type : hydraulique, compression de gaz, batterie, ou tout autre système.

L'intérêt du système est de récupérer une énergie maximale du vent, et de la stocker ou de la déstocker suivant les besoins requis par le réseau électrique.

Le montage de la figure 5 comporte deux avantages.

Il conduit tout d'abord au lissage de la puissance totale fourni par les éoliennes 20 qui s'effectue naturellement dans le réseau continu.

D'autre part, la panne d'un convertisseur 23 courant continu - courant alternatif n'entraîne pas l'arrêt d'une éolienne.

Ce montage permet enfin d'utiliser pour les convertisseurs 23 courant continu - courant alternatif des modules standardisés. Le module de base est par exemple un module unitaire de 1 MVA.

Comme cela a été indiqué précédemment, le système de stockage d'énergie 22 peut être omis. Dans ce cas, les sorties des convertisseurs courant continu-courant alternatif sont reliées en parallèle et au réseau 32, éventuellement à travers un transformateur.

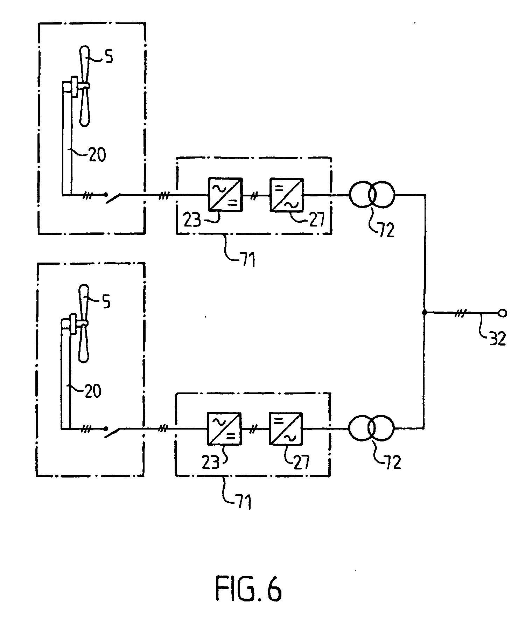

On peut également envisager un autre montage qui est illustré sur la figure 6.

Dans cet autre montage, chaque éolienne 20 est équipée d'un convertisseur courant alternatif-courant continu - courant alternatif 71 et éventuellement d'un transformateur élévateur 72 en sortie. L'interconnexion des éoliennes se fait alors au niveau du réseau alternatif 32. On peut également prévoir un transformateur entre les sorties des convertisseurs 71 connectées en parallèle et le réseau 32.

Le convertisseur 71 comprend un convertisseur courant alternatif - courant continu 23 et un convertisseur courant continu - courant alternatif 27.

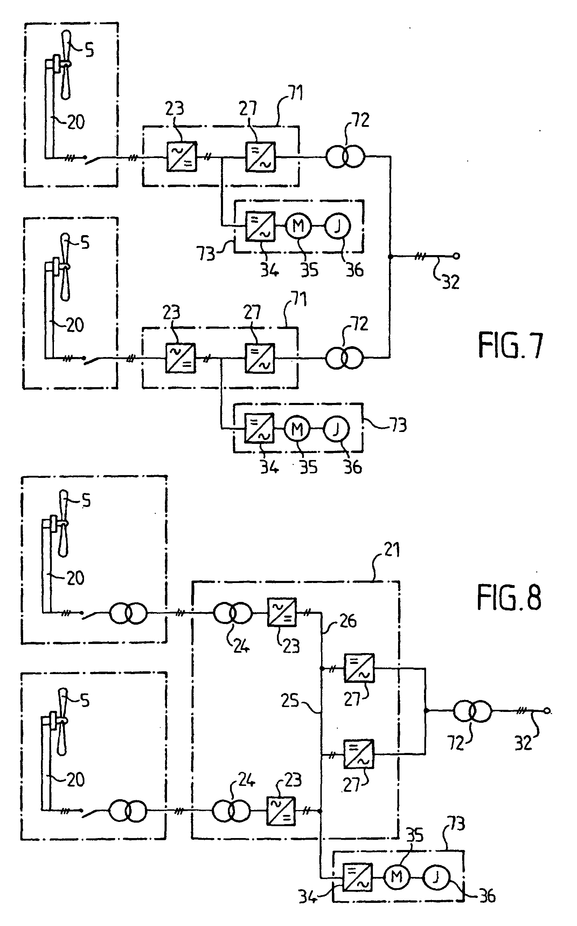

On peut également envisager d'autres montages dans lequel au moins un système de stockage d'énergie est prévu, comme illustrés sur les figures 7 et 8.

La figure 7 illustre un montage similaire à celui de la figure 6, dans lequel un système de stockage d'énergie cinétique 73 est connecté entre le convertisseur 23 courant alternatif - courant continu et le convertisseur 27 courant continu - courant alternatif. Il est alimenté en soutirage du réseau continu entre ces deux convertisseurs et permet de stocker et de déstocker l'énergie fournie par la ou les éoliennes.

Le système de stockage 73 se compose d'au moins d'un convertisseur courant continu - courant alternatif 34 réversible alimentant au moins un moteur à courant alternatif 35 qui entraîne au moins une inertie de grande valeur 36.

Ce système permet de lisser l'énergie fournie au réseau 32 en stockant et déstockant les fluctuations de puissance et d'énergie fournie par les éoliennes sous forme d'énergie cinétique.

La figure 8 illustre un montage similaire à celui de la figure 5, dans lequel le système de stockage d'énergie 22 est omis et un système de stockage d'énergie cinétique 73 est prévu.

Ce système 73 est connecté entre les convertisseurs 23 courant alternatif - courant continu et les convertisseurs 27 courant continu - courant alternatif.

Les sorties des convertisseurs 27 courant continu - courant alternatif sont reliées en parallèle et au réseau 32, éventuellement à travers un transformateur 72.

Le système de production d'énergie selon l'invention s'applique à tout type d'éolienne, notamment à axe sensiblement horizontal ou sensiblement vertical.

Par ailleurs, les convertisseurs décrits précédemment peuvent être prévus entre un alternateur d'un type quelconque associé à une éolienne, et le réseau. En d'autres termes, ces convertisseurs peuvent également être utilisés pour relier au réseau, une éolienne dont l'alternateur n'est pas nécessairement du type discoïde.

De plus, les montages qui ont été décrits en référence aux figures 5 à 8 sont utilisables pour des éoliennes équipées d'autres systèmes de production d'énergie que ceux conformes à l'invention. En particulier, ces montages de convertisseurs et éventuellement de système de stockage d'énergie, peuvent être utilisés avec des éoliennes qui ne sont pas associées à un alternateur discoide, mais par exemple à une génératrice asynchrone.

Les signes de référence insérés après les caractéristiques techniques mentionnées dans les revendications ont pour seul but de faciliter la compréhension de ces dernières et ne sauraient en limiter la portée.

## Revendications

1. Système de production d'énergie électrique associé à une éolienne qui comprend des pales (5) fixées sur un support et entraînant en rotation le rotor d'un alternateur (6, 40), de type discoïde, et constitué d'au moins un module (10, 70) comprenant au moins un disque rotor (7, 42, 43) et un disque stator (8, 41) centrés sur l'axe (16, 45) du support (4, 60) des pales, le disque rotor (7, 42, 43) étant directement couplé au support (4, 60) des pales (5) sans multiplicateur mécanique et les modules (10, 70) étant assemblés pour que tous les disques rotor et stator soient disposés coaxialement, **caractérisé en ce que** le support des pales est constitué par la carcasse (60) de l'alternateur (40), laquelle comprend le(s) disque(s) rotor (42, 43) de l'alternateur.

2. Système selon la revendication 1, **caractérisé en ce qu'**un module (10) comprend un disque rotor (7) placé entre deux disques stator (8).

3. Système selon la revendication 1, **caractérisé en ce qu'**un module (70) comprend un disque stator (41) placé entre deux disques rotor (42, 43).

4. Système selon l'une des revendications 1 à 3, **caractérisé en ce que** le(s) disque(s) rotor (7 ; 42, 43) est(sont) à aimants permanents.

5. Système selon l'une des revendications 1 à 4, **caractérisé en ce que** les disques stator (8, 41) sont fixés à la nacelle (3) de l'éolienne.

6. Système selon l'une des revendications 1 à 5, **caractérisé en ce qu'**un convertisseur courant alternatif- (courant continu -) courant alternatif est prévu entre l'alternateur (6, 40) et le réseau.

7. Système selon la revendication 6, **caractérisé en ce que** ledit convertisseur est composé d'un redresseur et d'un onduleur, tous deux pilotés suivant le principe de la modulation de largeur d'impulsions.

8. Système selon l'une des revendications 1 à 7, **caractérisé en ce que** l'éolienne comporte un système de contrôle global des paramètres de fonctionnement.

9. Eolienne comprenant un système de production d'énergie selon l'une des revendications 1 à 8 et dont certains composants, notamment les pales (5), leur support (4, 60), l'alternateur discoide (6, 40) et/ou la nacelle (3) sont réalisés séparément et assemblés définitivement au sommet du mât (1) de l'éolienne.

10. Parc d'éoliennes équipées chacune d'un système de production d'énergie électrique selon l'une des revendications 1 à 8 et d'un convertisseur (23) courant alternatif - courant continu, dont la sortie est reliée à au moins un convertisseur (27) courant continu - courant alternatif, la sortie commune des convertisseurs (27) courant continu - courant alternatif étant reliée au réseau (32).

11. Parc d'éoliennes selon la revendication 10, comprenant un système de stockage d'énergie (22), entre les convertisseurs (27) courant continu - courant alternatif et le réseau (32).

12. Parc d'éoliennes selon la revendication 10, comprenant au moins un système de stockage d'énergie cinétique (73), alimenté par la tension continue prélevée en sortie du (ou des) convertisseur(s) (23) courant alternatif - courant continu.

13. Parc d'éoliennes selon la revendication 12, dont le (ou les) système(s) de stockage d'énergie cinétique (73) comprend (nent) au moins un moteur à courant alternatif (35) entraînant au moins une inertie (36) et alimenté par au moins un convertisseur courant continu - courant alternatif (34) réversible, lui-même connecté en sortie du (ou des) convertisseur(s) (23) courant alternatif - courant continu.

14. Parc d'éoliennes selon l'une des revendications 10 à 13, lesdits convertisseurs (23) courant alternatif-courant continu étant constitués d'un redresseur piloté selon le principe de la modulation de largeur d'impulsions.

15. Parc d'éoliennes selon l'une des revendications 10 à 14, lesdits convertisseurs (27) courant continu-courant alternatif étant constitués d'un onduleur piloté selon le principe de la modulation de largeur d'impulsions.

## Patentansprüche

1. Einrichtung zum Erzeugen von elektrischer Energie, die einer Windkraftanlage mit Flügeln (5) zugeordnet ist, die an einem Träger befestigt sind und den Rotor eines Generators (6, 40) drehend antreiben, der vom diskoidalen Typ ist und aus zumindest einem Modul (10, 70) mit zumindest einer Rotorscheibe (7, 42, 43) und einer Statorscheibe (8, 41) besteht, die auf die Achse (16, 45) des Trägers (4, 60) der Flügel zentriert sind, wobei die Rotorscheibe (7, 42, 43) ohne mechanisches Übersetzungsgetriebe direkt an den Träger (4, 60) der Flügel (5) gekoppelt ist und die Module (10, 70) so zusammengefügt sind, dass sämtliche Rotor- und Statorscheiben koaxial angeordnet sind, **dadurch gekennzeichnet, dass** der Träger der Flügel aus dem Gehäuse (60) des Generators (40) besteht, das die Rotorscheibe bzw. Rotorscheiben (42, 43) des Generators enthält.

2. Einrichtung nach Anspruch 1, **dadurch gekennzeichnet, dass** ein Modul (10) eine Rotorscheibe (7) enthält, die zwischen zwei Statorscheiben (8) positioniert ist.

3. Einrichtung nach Anspruch 1, **dadurch gekennzeichnet, dass** ein Modul (70) eine Statorscheibe (41) enthält, die zwischen zwei Rotorscheiben (42, 43) positioniert ist.

4. Einrichtung nach einem der Ansprüche 1 bis 3, **dadurch gekennzeichnet, dass** die Rotorscheibe bzw. Rotorscheiben (7; 4, 43) mit Permanentmagneten ausgestattet ist/sind.

5. Einrichtung nach einem der Ansprüche 1 bis 4, **dadurch gekennzeichnet, dass** die Statorscheiben (8, 41 ) am Rumpf (3) der Windkraftanlage befestigt sind.

6. Einrichtung nach einem der Ansprüche 1 bis 5, **dadurch gekennzeichnet, dass** zwischen dem Generator (6, 40) und dem Netz ein Wechselstrom-Gleichstrom-Wechselstrom-Umformer vorgesehen ist.

7. Einrichtung nach Anspruch 6, **dadurch gekennzeichnet, dass** der Umformer aus einem Gleichrichter und einem Wechselrichter zusammengesetzt ist, die beide nach dem Prinzip der Pulsbreitenmodulation gesteuert werden.

8. Einrichtung nach einem der Ansprüche 1 bis 7, **dadurch gekennzeichnet, dass** die Windkraftanlage ein System zur gesamten Kontrolle der Funktionsparameter enthält.

9. Windkraftanlage mit einer Einrichtung zum Erzeugen von Energie nach einem der Ansprüche 1 bis 8 und von der bestimmte Bauteile, insbesondere die Flügel (5), deren Träger (4, 60), der diskoidale Generator (6, 40) und/oder der Rumpf (3) separat ausgebildet und an der Spitze des Turms (1) der Windkraftanlage endgültig zusammengefügt werden.

10. Windpark mit Windkraftanlagen, die jeweils mit einer Einrichtung zum Erzeugen von elektrischer Energie nach einem der Ansprüche 1 bis 8 und mit einem Wechselstrom-Gleichstrom-Umformer (23) ausgestattet sind, dessen Ausgang mit zumindest einem Gleichstrom-Wechselstrom-Umformer (27) verbunden ist, wobei der gemeinsame Ausgang der Gleichstrom-Wechselstrom-Umformer (27) mit dem Netz (32) verbunden ist.

11. Windpark nach Anspruch 10, mit einer Energiespeichereinrichtung (22) zwischen den Gleichstrom-Wechselstrom-Umformern (27) und dem Netz (32).

12. Windpark nach Anspruch 10, mit zumindest einer Kinetikenergiespeichereinrichtung (73), die mit der am Ausgang des bzw. der Wechselstrom-Gleichstrom-Umformer (23) abgenommenen Gleichspannung gespeist wird.

13. Windpark nach Anspruch 12, bei welcher die Kinetikenergiespeichereinrichtung bzw. -einrichtungen (73) zumindest einen Wechselstrommotor (35) enthält/ enthalten, welcher zumindest ein Trägheitselement antreibt und von zumindest einem umkehrbaren Gleichstrom-Wechselstrom-Umformer (34) gespeist wird, der selbst an den Ausgang des bzw. der Wechselstrom-Gleichstrom-Umformer (23) angeschlossen ist.

14. Windpark nach einem der Ansprüche 10 bis 13, wobei die genannten Wechselstrom-Gleichstrom-Umformer (23) aus einem Gleichrichter bestehen, der nach dem Prinzip der Pulsbreitenmodulation gesteuert wird.

15. Windpark nach einem der Ansprüche 10 bis 14, wobei die genannten Gleichstrom-Wechselstrom-Umformer (27) aus einem Wechselrichter bestehen, der nach dem Prinzip der Pulsbreitenmodulation gesteuert wird.

## Claims

1. System for producing electric energy associated with a wind turbine comprising blades (5) fixed to a support and driving in rotation the rotor of an alternator (6, 40) of discoid type, and consisting of at least one module (10, 70) comprising at least one rotor disk (7,42,43) and one stator disk (8,41) centred on the shaft (16, 45) of the blade support (4,60), the rotor disk (7,42,43) being directly coupled to the support (4,60) of the blades (5) with no mechanical gearing, and the modules (10, 70) being assembled so that all the rotor and stator disks are arranged coaxially, **characterized in that** the blade support consists of the frame (60) of the alternator (40), which frame comprises the rotor disk(s) (42, 43) of the alternator.

2. System as in claim 1, **characterized in that** one module (10) comprises a rotor disk (7) placed between two stator disks (8).

3. System as in claim 1, **characterized in that** one module (70) comprises a stator disk (41) placed between two rotor disks (42, 43) .

4. System as in any of claims 1 to 3, **characterized in that** the rotor disk(s) (7;42,43) have permanent magnets.

5. System as in any of claims 1 to 4, **characterized in that** the stator disks (8,41) are fixed to the nacelle (3) of the wind turbine.

6. System according to any of claims 1 to 5, **characterized in that** an alternating current-(direct current-) alternating current converter is provided between the alternator (6, 40) and the network.

7. System as in claim 6, **characterized in that** said converter consists of a rectifier and an inverter, both piloted along the principle of pulse width modulation.

8. System as in any of claims 1 to 7, **characterized in that** the wind turbine comprises a system for global control of operating parameters.

9. Wind turbine comprising a system for producing energy as in any of claims 1 to 8 and of which some components, in particular the blades (5), their support (4, 60), the discoid alternator (6, 40) and/or the nacelle (3) are fabricated separately and finally assembled at the top of the mast (1) of the wind turbine.

10. Farm of wind turbines each equipped with a system for producing electric energy as in any of claims 1 to 8 and with an alternating current-direct current converter (23) whose output is connected to at least one direct current-alternating current converter (27), the common output of the direct current-alternating current converters (27) being connected to the network (32).

11. Wind turbine farm as in claim 10, comprising an energy storage system (22) between the direct current-alternating current converters (27) and the network (32).

12. Wind turbine farm as in claim 10, comprising at least one kinetic energy storage system (73) supplied by the direct voltage taken at the output of the alternating current-direct current converter(s) (23).

13. Wind turbine farm as in claim 12, whose kinetic energy storage system(s) (73) comprise at least one alternating current motor (35) driving at least one inertia (36) and supplied by at least one reversible direct current - alternating current converter (34), itself connected to the output of the alternating current-direct current converter(s) (23).

14. Wind turbine farm as in any of claims 10 to 13, said alternating current-direct current converters (23) consisting of a rectifier piloted along the principle of pulse width modulation.

15. Wind turbine farm as in any of claims 10 to 14, said direct current-alternating current converters (27) consisting of an inverter piloted along the principle of pulse width modulation.
